# EUROPEAN PATENT SPECIFICATION

(11) **EP 1 849 753 B1**
(45) Date of publication and mention of the grant of the patent: **04.08.2010**
(21) Application number: 07105677.4
(22) Date of filing: 04.04.2007
(51) Int. Cl.: C03B 9/16, C03B 9/347, C03B 9/353

(54) **Blank mold for an I.S. glass forming machine**
Vorform für eine I.S.-Glasformmaschine
Moule d'ébaucahge pour machine à mouler le verre à section individuelle

(30) Priority: 27.04.2006 US 414063
(43) Date of publication of application: 31.10.2007
(73) Proprietor: Emhart Glass S.A., 6330 Cham (CH)
(72) Inventor: Fenton, F. Alan, Granby CT Connecticut 06035 (US)
(74) Representative: Johnstone, Douglas Ian

(56) References cited:
- EP-A- 1 329 428
- US-A- 1 911 119
- US-A- 4 367 088
- US-A- 4 470 836

## Description

The present invention relates to a blank mold for an I. S. (individual section) machine for forming molten glass gobs into containers such as bottles.

An I. S. machine is supplied with discrete gobs of molten glass from a feeder. The gobs are routed via a delivery system which drops each gob into a desired blank mold in the machine. The machine has a number of sections, 10 for example, and each section makes the same number of bottles per cycle, two for example. In such a "double gob" machine, each section will have a pair of blank molds. Each blank mold is defined by two opposed side mold halves or blanks which are displaced, by a mold open and close mechanism, from an open position to a closed position where the mold halves engage, clamping a bottom mold there between. These molds are open at the top. A gob will drop into the mold and the top opening will be closed by a baffle. The lower surface of the baffle, with the inner surfaces of the blanks and the bottom mold define the outer surface of the "parison" which will be formed in the blank mold.

It is advantageous for a gob to drop vertically into its mold along the vertical axis of the mold (this can be even more important when non round ware is to be formed). As a practical matter this may not happen and then operators may rely on a funnel mechanism to improve the delivery of the gob into the mold. The funnel mechanism, which has been used since it was developed in 1928 (see U.S. Patent No. 1,911,119) is a device that supports a funnel which can be displaced from a remote position to an advanced operating position where the axis of the funnel is coaxial with the axis of the mold and directly above the mold. The funnel will perfect the downward trajectory of a gob so that it will enter the blank mold as desired.

In the actual sequencing of the machine, the blank molds will be closed (open at the top), the funnel will be moved to the operating position on top of the mold, the gob will be dropped through the funnel into the mold, and a baffle mechanism will operate to advance a baffle from a remote position to an operating position on top of the funnel. "Settle blow" air will be blown out of the baffle downwardly into the mold to push the gob down into the mold. At the conclusion of "settle blow", the baffle will be displaced back to its remote position, the funnel will be retracted back to its remote position, and the baffle will be displaced to its operating position where it closes the open top of the blank mold. The "parison" will now be formed. Once formed (and cooled to the point where it can be transported), the baffle is displaced back to its remote position, the blank molds are opened and the "parison" is displaced to the blow station where it will be blown into a bottle.

The present invention relates to a blank mold generally of the type disclosed in US-A-4,367,088 and as defined in the preamble of claim 1.

In the latter US-A, it is proposed to dispense with the funnel support and displacement mechanism by forming the upper end of the blank mold with an integral funnel.

Blank molds having superimposed integral funnels are also disclosed in US-A-4,470,836 and EP-A-1,329,428.

It is an object of the present invention to provide an improved blank mold and funnel arrangement for an I. S. machine which dispenses with the need for a funnel mechanism.

According to the present invention, there is provided a blank mold for an I.S. machine as defined in the characterizing clause of claim 1.

Reference will now be made to the accompanying drawings which illustrate a presently preferred embodiment incorporating the principles of the invention, and in which:-
Figure 1 shows an elevational cross-sectional view of a pair of blank mold halves or blanks in their engaged or closed position;
Figure 2 is a view of one of the blanks taken at Y-Y of Figure 1;
Figure 3 is a view of the funnel taken at X-X of Figure 1; and
Figure 4 is a top view of the baffle of the baffle mechanism shown in Figure 1.

The blank station of each section of an I. S. machine will have one or more blank molds. Each blank mold has a pair of opposed mold halves or blanks 10. Each blank has a number of air passages 12 which extend vertically through the mold and are located circumferentially about the blank. The blanks have a number of hangers 14 which are received by suitable flanges 16 on the mold open and close mechanism. Also, a part of the mold open and close mechanism are air plenums 18 which engage in semi annular recesses in the upper ends of the blanks, and supply air to the air passages 12.

The blanks 10 have an interior surface 20 forming an upwardly opening cavity which defines the side wall of the parison. A baffle mechanism is provided which includes a baffle head 28 having a baffle 24 secured by a screw 26 to a baffle carrier reciprocable in the baffle head 28. When the baffle is, as illustrated, at its fully down position, the bottom surface 22 of the baffle defines the bottom surface of the parison (the parison is formed upside down). The baffle 24 and blanks 10 have matched beveled or inclined annular surfaces 30, 32 to effect the desired sealing of the interior of the closed blanks.

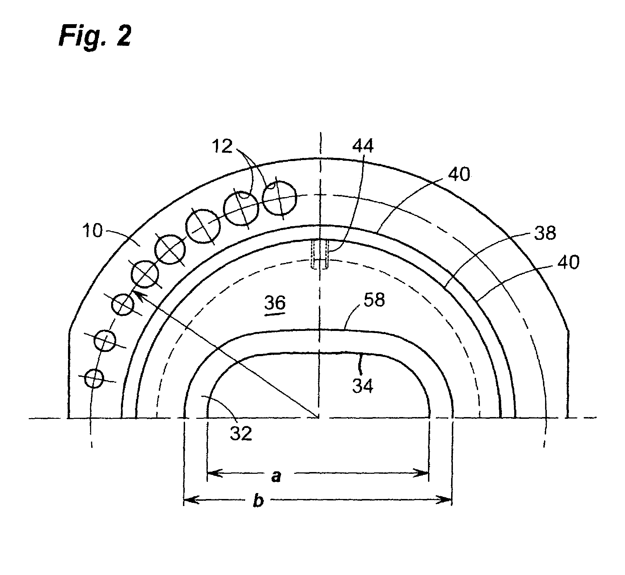

Figure 2 shows one half of a mold opening 34 which, in this embodiment, is oblong for a non round bottle having an oblong base. The opening 34, which has a major dimension "a", is defined by the lower end of the inclined surface 32 of each blank 10, and its position, which corresponds to the upward extent of the interior surface 20, is a defined distance below the horizontal flat top surface 36 of the blank. The upper end of the inclined surface 32 defines one half of an oblong opening 58 in the top surface 36, the opening having a major dimension "b". This surface 36 has a semi cylindrical outer edge 38 which is set in from the outer semi cylindrical upper region or top 40 of the blank defined by the side walls of the air plenum recesses. A semi annular recess 42 is defined in the semi cylindrical outer edge 38 and a screw hole 44 is located in the semi cylindrical outer edge 38.

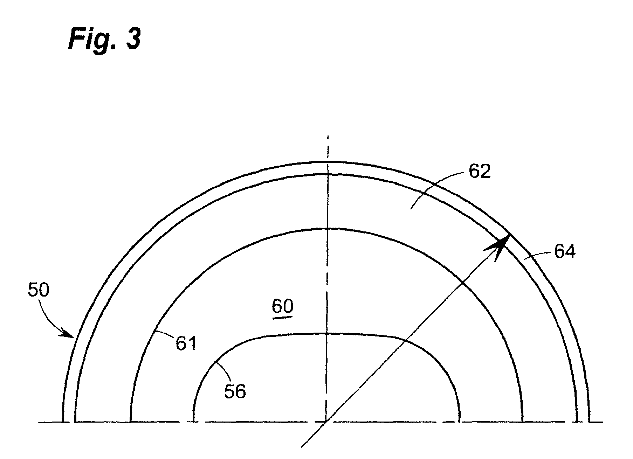

A funnel is provided which comprises a pair of semi cylindrical funnel segments or halves 50 attached one to the top of each blank, between the blanks and baffle head 28. Each funnel segment has an internally recessed bottom 52 for placement within the recessed top of the blank. A screw 54 releasably holds each funnel segment in place on the top of its associated blank. As can be seen from Figure 3, each funnel segment defines one half of a bottom oblong opening 56 which corresponds to the top oblong opening 58 of the blank. The interior gob-directing surface 60 of the funnel segment transitions upwardly to a semi circular top opening 61 having a diameter "c". A beveled semi cylindrical sealing surface 62 extends between the top opening 61 and a narrow top surface 64 of the funnel segment which extends outwardly of the diameter "d" of the baffle head.

The baffle mechanism includes an arm to which the baffle head 28 is secured, and the arm is displaceable from a remote position to a position above the closed blanks in a conventional manner. The head has two vertical operating positions: 1. An up "settle blow" position where the baffle is located spaced from the inclined sealing surfaces 32 of the closed blanks, and 2. A down position where the inclined sealing surface 30 of the baffle engages with the sealing surfaces 32 of the blanks. In the up "settle blow" position, air is directed into the blank mold via holes 66 in the baffle 24. In both positions 1. and 2. the bottom beveled surface 68 of the baffle head engages corresponding surfaces 62 on the funnel segment surfaces 62 to locate the baffle 24 relative to the blanks.

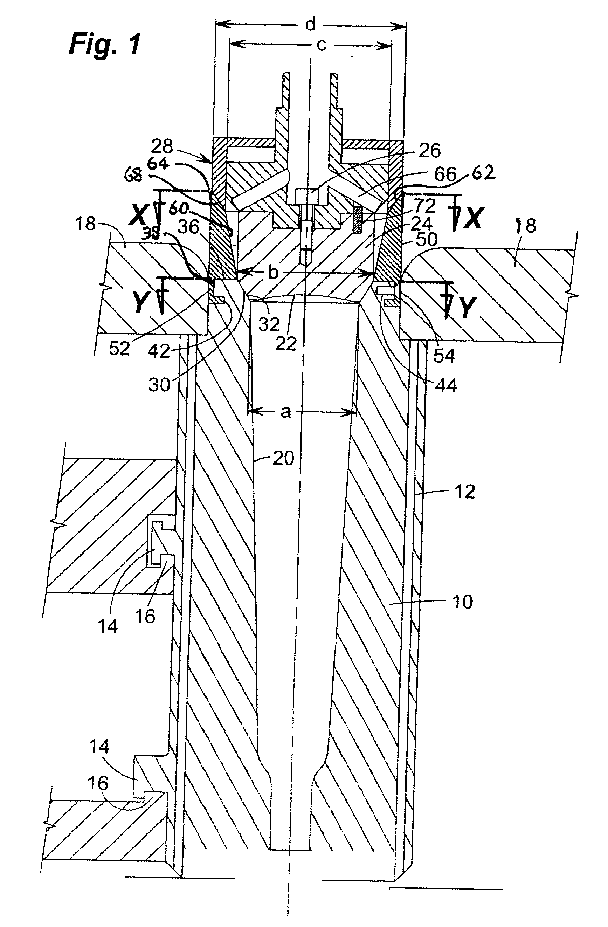

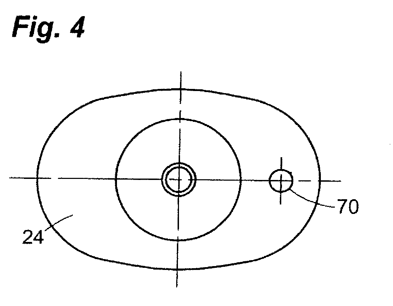

Figure 4 illustrates the oblong shape of the baffle 24 with a vertical hole 70 for receiving an orientation pin 72 shown in Figure 1.

With the funnel a part of the blank mold, it no longer is necessary to support the funnel on a displaceable mechanism. This not only greatly reduces the cost of performing the desired function, it speeds up the process since the baffle only has to be displaced once and funnel mechanism movement is eliminated.

## Claims

1. A blank mold for an I. S. machine comprising a pair of opposed engageable blanks (10) and a pair of funnel segments (50) each located on top of an associated one of the blanks (10), the blanks together defining an upwardly extending inner surface (20) of an upwardly opening cavity defining the side wall of a parison, and the funnel segments together defining a horizontally disposed top opening (61) communicating via a downwardly extending beveled surface (60) with said upwardly opening cavity, **characterized in that**
the pair of blanks (10) together define
a top surface (36) with an opening (58) therein, with the inner surface (20), which defines the side wall of a parison, extending upwardly to a position (34) a defined distance below the top surface (36) of the blanks, and
a continuous, beveled surface (32) connecting the top of the inner surface (20) defining the side wall of the parison and the top opening (58) of the blanks, and
said pair of funnel segments (50) each has a continuous beveled surface (60) extending from a circular horizontally disposed top opening (61) downwardly to a smaller centrally located bottom opening (56),
said pair of funnel segments (50) and said pair of blanks (10) have interfitting means (42, 52) so that each funnel segment can be fit to an associated one of the pair of blanks with the top opening (58) of the blank and the bottom opening (56) of the funnel segment being coextensive, and
means (44, 54) are provided for releasably connecting each funnel segment (50) to the blank (10) to which it is fit.

2. A blank mold according to claim 1, wherein the bottom opening (56) of said funnel segments (50) fit to said blanks (10), and the top opening (58) of said blanks, when engaged, are oblong.

3. A blank mold according to claim 1 or 2, including a beveled semi cylindrical sealing surface (62) extending between the circular top opening (61) and a top surface of each funnel segment, and configured to engage a corresponding beveled surface (68) defined on a baffle mechanism when associated with the blank mold.

4. A blank mold according to claim 1, 2 or 3, wherein the means for releasably connecting each funnel segment is a screw (54).

5. An I.S. machine provided with a blank mold according to any preceding claim.

## Patentansprüche

1. Rohlingsform für eine IS-Maschine, umfassend ein Paar von gegenüberliegenden Formhälften (10), die miteinander in Eingriff gebracht werden können, und einem Paar von Trichtersegmenten (50), die jeweils oberhalb einer zugeordneten Formhälfte (10) angeordnet sind, wobei die Formhälften zusammen eine sich aufwärts erstreckende innere Oberfläche (20) eines sich nach oben öffnenden Hohlraums definieren, der wiederum die Seitenwand eines Külbels definiert, und wobei die Trichtersegmente zusammen eine horizontal angeordnete obere Öffnung (61) definieren, die über eine sich abwärts erstreckende abgeschrägte Oberfläche (60) mit dem sich nach oben öffnenden Hohlraum verbunden ist, **dadurch gekennzeichnet, dass**
das Paar der Formhälften (10) zusammen
eine obere Oberfläche (36) mit einer darin befindlichen Öffnung (58) definiert, wobei sich die innere Oberfläche (20), die die Seitenwand des Külbels definiert, aufwärts bis zu einer Position (34) erstreckt, die in einem definierten Abstand unterhalb der oberen Oberfläche (36) der Fonnhälften liegt, sowie
eine kontinuierliche abgeschrägte Oberfläche (32), die die Oberseite der inneren Oberfläche (20), die die Seitenwand des Külbels definiert, mit der oberen Öffnung (58) der Formhälften verbindet, und
wobei das Paar der Trichtersegmente (50) jeweils eine kontinuierliche abgeschrägte Oberfläche (60) hat, die sich von einer kreisförmigen horizontal angeordneten oberen Öffnung (61) abwärts zu einer kleineren zentral angeordneten Bodenöffnung (56) erstreckt,
wobei das Paar der Trichtersegmente (50) und das Paar der Formhälften (10) Verbindungselemente (42, 52) aufweisen, so dass jedes Trichtersegment in eine zugeordnete Formhälfte des Paares von Formhälften eingesetzt werden kann, wobei die obere Öffnung (58) der Formhälfte und die Bodenöffnung (56) des Trichtersegmentes koextensiv sind, und
wobei eine Einrichtung (44, 54) vorgesehen ist, um jedes Trichtersegment (50) lösbar mit der Formhälfte (10), in die es eingesetzt wird, zu verbinden.

2. Rohlingsform nach Anspruch 1, wobei die Bodenöffnung (56) der Trichtersegmente (50) zu den Formhälften (10) passt und wobei die obere Öffnung (58) der Formhälften länglich ist, wenn sie in Eingriff stehen.

3. Rohlingsform nach Anspruch 1 oder 2, umfassend eine abgeschrägte halbzylindrische Abdicht-Oberfläche (62), die sich zwischen der kreisförmigen oberen Öffnung (61) und einer oberen Oberfläche jedes Trichtersegmentes erstreckt und so konfiguriert ist, dass sie in eine entsprechend abgeschrägte Oberfläche (68) eingreift, die auf einem Umlenkmechanismus definiert ist, wenn er der Rohlingsform zugeordnet wird.

4. Rohlingsform nach Anspruch 1, 2 oder 3, wobei die Einrichtung zur lösbaren Verbindung jedes Trichtersegmentes eine Schraube (44) ist.

5. IS-Maschine mit einer Rohlingsform nach einem der vorangegangenen Ansprüche.

## Revendications

1. Moule ébaucheur pour une machine sectionnelle comprenant une paire d'ébauches (10) opposées pouvant être en prise et une paire de segments d'entonnoir (50), chacun positionné sur le dessus de l'une associée des ébauches (10), les ébauches définissant ensemble une surface interne (20) s'étendant vers le haut d'une cavité ouvrant vers le haut définissant la paroi latérale d'une paraison, et les segments d'entonnoir définissant ensemble une ouverture supérieure (61) disposée horizontalement communiquant par l'intermédiaire d'une surface biseautée (60) s'étendant vers le bas avec ladite cavité ouvrant vers le haut, **caractérisé en ce que :**
les deux ébauches (10) définissent ensemble :
une surface supérieure (36) avec une ouverture (58) à l'intérieur de celle-ci, avec la surface interne (20) qui définit la paroi latérale d'une paraison, s'étendant vers le haut jusqu'à une position (34) sur une distance définie au-dessous de la surface supérieure (36) des ébauches, et
une surface biseautée continue (32) raccordant la partie supérieure de la surface interne (20) définissant la paroi latérale de la paraison et l'ouverture supérieure (58) des ébauches, et
lesdits deux segments d'entonnoir (50) ont chacun une surface biseautée continue (60) s'étendant vers le bas à partir d'une ouverture supérieure circulaire (61) disposée horizontalement, jusqu'à une ouverture inférieure plus petite (56) positionnée de manière centrale,
lesdits deux segments d'entonnoir (50) et lesdites deux ébauches (10) ont des moyens d'assemblage (42, 52) de sorte que chaque segment d'entonnoir peut être monté sur l'une associée des deux ébauches avec l'ouverture supérieure (58) de l'ébauche et l'ouverture inférieure (56) du segment d'entonnoir qui sont coextensives, et
des moyens (44, 54) sont prévus pour raccorder de manière amovible chaque segment d'entonnoir (50) sur l'ébauche (10) sur laquelle il se monte.

2. Moule ébaucheur selon la revendication 1, dans lequel l'ouverture inférieure (56) desdits segments d'entonnoir (50) montée sur lesdites ébauches (10) et l'ouverture supérieure (58) desdites ébauches, lorsqu'elles sont en prise, sont oblongues.

3. Moule ébaucheur selon la revendication 1 ou 2, comprenant une surface d'étanchéité semi-cylindrique biseautée (62) s'étendant entre l'ouverture supérieure circulaire (61) et une surface supérieure de chaque segment d'entonnoir et configurée pour venir en prise avec une surface biseautée (68) correspondante, définie sur un mécanisme de déflecteur lorsqu'il est associé au moule ébaucheur.

4. Moule ébaucheur selon la revendication 1, 2 ou 3, dans lequel les moyens pour raccorder de manière amovible chaque segment d'entonnoir sont une vis (54).

5. Machine sectionnelle prévue avec un moule ébaucheur selon l'une quelconque des revendications précédentes.
